# EUROPEAN PATENT APPLICATION

(11) **EP 0 552 844 A1**
(43) Date of publication of application: **28.07.1993**
(21) Application number: 93200154.8
(22) Date of filing: 22.01.1993
(51) Int. Cl.: B60Q 7/02, B60Q 1/30

(54) **Signalling device for lorries which are provided with a loading flap**

(30) Priority: 23.01.1992 NL 9200126
(71) Applicant: van Eck, Johannes, NL-4145 MP Schonnrewoers (NL); Furster, Willem Frederik, NL-3703 AD Zeist (NL)
(72) Inventor: van Eck, Johannes, NL-4145 MP Schonnrewoers (NL); Furster, Willem Frederik, NL-3703 AD Zeist (NL)
(74) Representative: Reynvaan, Lambertus Johannes

(57) **Abstract**

The invention relates to a signalling device for lorries (1) which are provided with a loading flap (2). During the loading and unloading of lorries the loading flap, which is in the horizontal position in line with the loading floor (5), extends beyond the lorry, and thus constitutes a hazard for other traffic. In order to warn the traffic, the invention proposes a signalling device comprising at least one arm which is fitted at the side where the loading flap is situated and extends in the horizontal direction, and which bears a warning light (13) at the free end. The arm comprising a drive means (7,8) which is operated in such a way through the movements of the loading flap that the arm is only in the extended position when the loading flap is in the horizontal position in line with the loading floor. Two of such arms are preferably present, each near a side of the loading flap, under the vertical projection of the loading flap.

## Description

The present invention relates to a signalling device for lorries which are provided with a loading flap according to the preamble of Claim 1.

During loading and unloading of a lorry with the aid of a loading flap, the already recognised problem occurs that the loading flap constitutes a hazard for other traffic when it is in the horizontal position in line with the loading floor. In this position the loading flap projects 1.5 to 2 metres beyond the back of the lorry, and is difficult to see in this position. This means that the loading flap is a source of many serious accidents in the case of motorists, cyclists and moped riders.

A number of proposals for warning other traffic have already been made, but they have found little or no acceptance until now.

For example, European Patent Specification 0,253,209 discloses a loading flap which is partially in the form of a hollow element, and of which a side surface is provided with a transparent covering behind which a light source is fitted. A similar solution is known from Dutch Patent Application 8900898. It will be clear that a light built into the loading flap is difficult to see because of the steeply backward sloping ramp edge of the loading flap. Besides, such a built-in light is very susceptible to faults and likely to become damaged, as a result of the rough handling of the loading flap.

French Patent Specification 2,602,191 discloses a loading flap at the bottom side of which a screen can be unfolded by means of a mechanical construction, which screen forms a visual obstacle between the loading flap and the ground. Such a construction fixed under the loading flap is particularly fragile as a result of knocks and dirt.

Finally, German "Gebrauchsmuster" 8,530,444.1 discloses flat warning lights which can be fitted at the corner points on the top surface of the loading flap. The disadvantage of this is that these lamps form a raised part on the top surface of the loading flap, which raised part is a hindrance during loading and unloading, and is difficult to see.

The object of the present invention is then to provide a signalling device by means of which the traffic can be warned in an effective way of the presence of the projecting loading flap, which device functions reliably without the disadvantages of the known devices.

This object is achieved according to the invention by means of a signalling device according to the characterising part of Claim 1.

The invention is in fact based on the idea that the signalling device must not be fitted on or at the loading flap itself. On the one hand, the person carrying out the loading and unloading finds obstacles on the top surface of the loading flap a hindrance and dangerous, while, on the other, provisions on the loading flap itself do not have a long life. Due to the fact that the signalling device according to the invention is slid out only when the loading flap is in the position which constitutes a hazard for traffic, and is stored in the body or the chassis of the lorry, it is afforded optimum protection and is not subject to knocks and shocks from the loading flap.

According to a preferred embodiment of the invention, the signalling device comprises two arms, which are each fitted near a side of the lorry and in the extended position lie under the loading flap within its vertical projection. In this way a warning light is present near each projecting corner point of the loading flap.

The warning lights are operated according to the invention by activating or not activating the control mechanism of the loading flap. As soon as the operator has parked the lorry, he will switch on the hydraulic control mechanism of the loading flap to start loading or unloading. This causes the warning lights of the signalling device to be turned on automatically. These warning lights remain on all the time so long as the control mechanism is switched on, thus irrespective of the position of the loading flap or of the signalling device.

The invention will be explained in greater detail with reference to the drawing, in which an embodiment of the invention is shown diagrammatically as an example.
Figure 1 shows diagrammatically a side view of the back of a lorry, with a signalling device according to the invention in the extended position;
Figure 2 shows a top view of an arm of the signalling device in the extended position; and
Figure 3 shows a top view of the arm of Figure 2 in the retracted position.

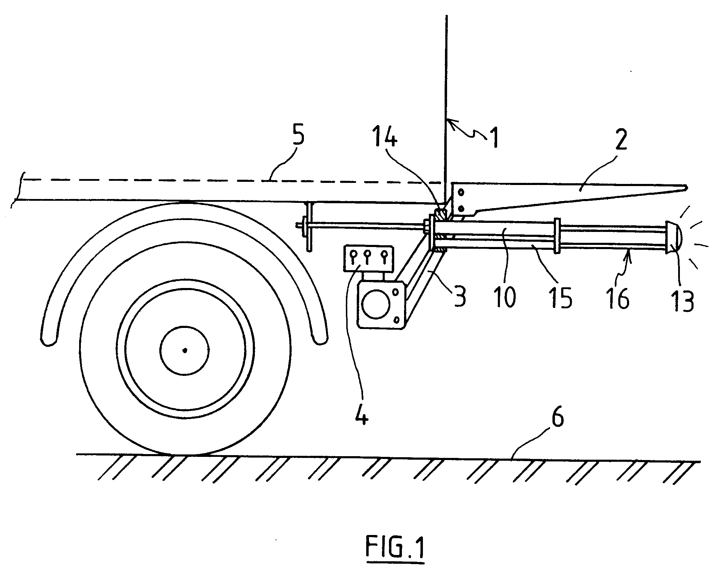

Figure 1 shows diagrammatically the back of a lorry 1, which is provided with a loading flap 2. The loading flap is connected by means of hinged arms 3 to the body or the chassis of the lorry and can be operated by means of a control mechanism 4, which in a known manner comprises a hydraulic system (not shown). When the lorry is travelling the loading flap is in the non-working position. In the embodiment shown this is a vertical position, but there are also loading flaps which are slid under the loading floor or folded up in another way when in the non-working position. As soon as loading or unloading is started, the loading flap is turned into the horizontal (use) position, which is shown in Figure 1. In this position the loading flap lies in line with the loading floor 5 of the lorry. In this position a load can be driven onto the loading flap, following which the loading flap can be lowered until it rests on the road surface 6. The loading flap can then be raised again to the position shown in Figure 1 etc. until the loading or unloading is completed.

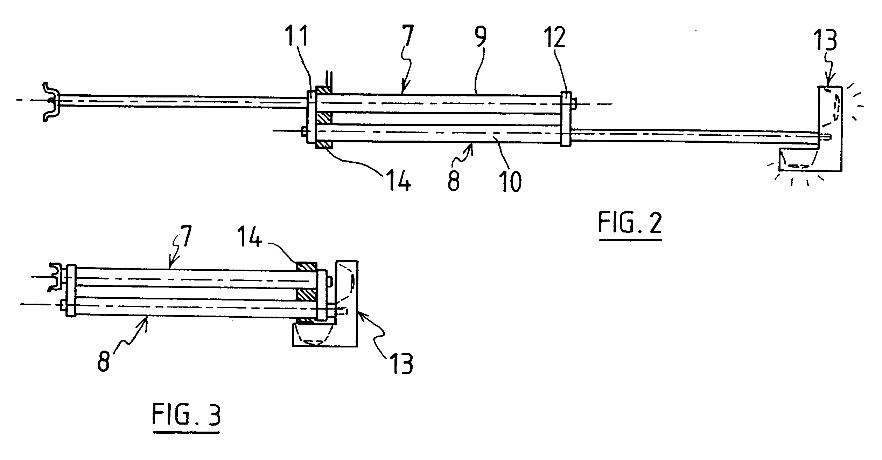

It will be clear that the horizontal position of the loading flap shown in Figure 1 constitutes the greatest hazard for other traffic, and the signalling device which is to be described now partly with reference to Figures 2 and 3 is fitted to warn said traffic.

In the embodiment shown the signalling device consists of an arm which is formed by two parallel piston-cylinder assemblies 7 and 8 which are connected to each other and run in opposite directions, and which are connected in a manner not shown in any further detail to the pneumatic system of the lorry. As can be seen clearly in Figure 2, the cylinder housings 9 and 10 of the two assemblies are connected to each other at both ends by means of connecting plates 11, 12. The piston-cylinder assemblies are arranged in such a way that the free end of the piston rod of one assembly 7 is securely fixed to the body or the chassis of the lorry, while the free end of the piston rod of the other assembly 8 bears a warning light 13. This warning light can be of any suitable type. Both cylinder housings 9 and 10 are slidably supported in a bearing 14 so that they slide between the two connecting plates, said bearing being made of a suitable plastic and being securely fixed to the body or the chassis of the lorry.

In order to increase the rigidity of the arm, the cylinder housing 15 of a third piston-cylinder assembly 16 is fitted between the connecting plates 11 and 12. This piston-cylinder assembly lies below the piston-cylinder assemblies 7 and 8, and is directed in the same way as the piston-cylinder assembly 8 bearing the warning light 13, and the free end of the piston rod of this third assembly 16 is also connected to the warning light. The third piston-cylinder assembly serves only as a support for the warning light in order to prevent bending of the piston rod of the assembly 8 as a result of the force of gravity and accidental turning thereof. The third piston-cylinder assembly 16 thus has no function in the sliding out of the warning light 13, and is therefore not activated by a pneumatic or hydraulic medium. A piston-cylinder assembly is selected for practical reasons, but any other suitable telescopically extending element could equally be used.

Two of such arms are preferably fitted, each near a side of the lorry, in such a way that the arms lie below the loading flap within the vertical projection thereof when the loading flap is in the horizontal position in line with the loading floor 5.

The signalling device works as follows:
As soon as the lorry driver switches on the control mechanism of the loading flap in order to start loading or unloading, the warning lights 13 are switched on automatically. These warning lights remain on or flashing during the whole time that the loading flap is in use or the control mechanism thereof is switched on.

The loading flap is then turned out of the vertical position into the position shown in Figure 1, in which the loading flap lies in line with the loading floor 5. As soon as the loading flap 2 begins to turn, the two piston-cylinder assemblies 7 and 8 of the two arms are activated, with the result that the warning lights 13 are pushed out. The control of the signalling device can be derived from, for example, the movement of the arms 3 of the loading flap. When a load is placed on the loading flap, the loading flap must lower to the ground 6. As soon as the lowering of the loading flap starts, the two piston-cylinder assemblies 7 and 8 of the signalling device are activated in opposite directions, so that the two arms thereof are pushed inwards, with the result that the loading flap 2 can move freely down and back up again. The signalling device is thus only pushed outwards when the loading flap 2 is in the position shown in Figure 1. During the remaining time the two arms of the signalling device are slid inwards and are thus protected from damage and dirt.

The construction with the two parallel piston-cylinder assemblies 7 and 8 running in opposite directions has the advantage that in the retracted position little space is taken up, while the desired stroke length is still obtained. Besides, the speed at which the arms are slid outwards and inwards is doubled as a result.

It will be clear to the person skilled in the art that the invention is not limited to the embodiment shown and described here, but that a large number of variants and modifications are possible within the scope of the appended claims. For example, instead of piston-cylinder assemblies, other mechanical means can also be used for sliding the warning lights in and out.

## Claims

1. Signalling device for lorries (1) which are provided with a loading flap (2) which by means of a control mechanism can be moved from a non-working position into a horizontal position in which the loading flap lies in line with the loading floor (5), and then in this horizontal position can be moved down to the road surface (6) and up again, **characterised in that** the signalling device comprises at least one arm (7,8) which is fitted at the rear side of the lorry where the loading flap is situated and can be slid out in the horizontal longitudinal direction of the lorry, which arm bears a warning light (13) at the free end and comprises a drive means (7,8) which is operated in such a way by the movements of the loading flap that the arm is in the outward extended position only when the loading flap is in the horizontal position in line with the loading floor.

2. Signalling device according to Claim 1, **characterised in that** it comprises two arms, each fitted near one side of the loading flap.

3. Signalling device according to Claim 1 or 2, **characterised in that** in the extended position the arms are situated below the loading flap within the vertical projection thereof.

4. Signalling device according to the preceding Claims 1 - 3, **characterized in that** the arms are each formed by two piston-cylinder assemblies (7, 8), the cylinder housings (9,10) of which are connected to each other in a parallel relationship and said assemblies run in opposite directions, the free end of the piston rod of one piston-cylinder assembly (7) being connected to the body or the chassis of the lorry, while the free end of the piston rod of the other piston-cylinder assembly (8) bears the warning light (13), and said two cylinder housings of the said assemblies are slidably supported in a bearing (14) which is secured to the body of the lorry.

5. Signalling device according to Claim 4, **characterised in that** each arm is provided with a telescopically extending supporting element (16), of which one end is connected to the warning light (13), while the other end is connected to the cylinder housings (9,10) of the two piston-cylinder assemblies (7,8) and is supported slidably therewith in the bearing (14).

6. Signalling device according to Claim 5, **characterised in that** the telescopically extending supporting element comprises a piston-cylinder assembly (16).

7. Signalling device according to the preceding Claims 1 - 6, **characterised in that** the warning lights are operated by activating or not activating the control mechanism (4) of the loading flap.
